# EUROPEAN PATENT APPLICATION

(11) **EP 4 550 937 A1**
(43) Date of publication of application: **07.05.2025**
(21) Application number: 24196837.9
(22) Date of filing: 27.08.2024
(51) Int. Cl.: H05B 6/80, F27B 21/00, F27D 11/12

(54) **ROTARY MICROWAVE APPARATUS**

(30) Priority: 31.10.2023 KR 20230147509
(71) Applicant: ECOPRO BM CO., LTD., Cheongju-si, Chungcheongbuk-do 28117 (KR); EcoProHN Co. Ltd., Cheongju-si, Chungcheongbuk-do 28116 (KR)
(72) Inventor: LEE, Chong Min, 28116 Cheongju-si, Chungcheongbuk-do (KR); LEE, Dongwook, 28116 Cheongju-si, Chungcheongbuk-do (KR); JEON, Minyeong, 28116 Cheongju-si, Chungcheongbuk-do (KR); CHAE, Taesung, 28116 Cheongju-si, Chungcheongbuk-do (KR); JANG, Hyunseok, 28116 Cheongju-si, Chungcheongbuk-do (KR); SHIN, Baekkyoung, 28116 Cheongju-si, Chungcheongbuk-do (KR)
(74) Representative: Beck & Rössig European Patent Attorneys

(57) **Abstract**

One embodiment of the present disclosure provides a rotary microwave apparatus including: a sintering body; a microwave-permeable cylindrical rotating tube located in the sintering body and configured to mix a powder raw material while rotating in a horizontal direction; and a microwave generator connected to the sintering body and configured to radiate microwaves to the cylindrical rotating tube, wherein the cylindrical rotating tube includes a stirring unit provided on an inner circumferential surface in a longitudinal direction, and configured to mix the powder raw material while being rotated by the cylindrical rotating tube.

## Description

### BACKGROUND

### 1. Field of the Invention

The present disclosure relates to an apparatus which heats a powder raw material using microwaves and a cylindrical rotating tube which rotates in a horizontal direction to complex nanomaterials.

### 2. Discussion of Related Art

Lithium-ion secondary batteries are the best batteries among currently commercialized secondary batteries, and accordingly, the demand therefor in cell phones, laptops, personal computers (PCs), power tools, automobiles, and the like is expanding.

Secondary batteries have a principle of using energy generated when electrons move from a negative electrode to a positive electrode during discharging to generate power, and one material that is important for them is an electrode material. Specifically, stable carbon-based materials such as natural graphite, artificial graphite, and the like are used as conventional negative electrode materials, but a low theoretical capacity (372 mAh/g) and a low output property appear as problems.

A silicon-based negative electrode material which is an alternative to a carbon-based negative electrode material has a theoretical capacity of 10 times that of graphite, but when lithium ions are adsorbed and desorbed, there is a problem in that volume expansion is large (300 to 400%) and a crystal structure is unstable, thereby not only causing damage to an electrode plate but also causing a sharp decrease in capacity. Accordingly, rather than applying silicon-based materials alone, research on a silicon-carbon composite in which silicon nanoparticles are formed on a graphite surface is being actively conducted.

For example, in the case of a silicon-carbon composite manufacturing method of forming silicon nanoparticles on a carbon surface using microwaves, silicon has a melting point of 1414 °C, and when melted, exhibits a phenomenon in which density increases more than a solid state like water, and graphite (a carbon-based material) exhibits a property of rapidly generating heat when π electrons which are present in a structure are alternately induced into a negative electrode (-) and a positive electrode (+) using microwaves (with a wavelength of 1 m to 1 mm and a frequency of 300 MHz to 300 GHz). By applying this phenomenon, silicon with a lower melting point compared to graphite can be melt-processed on a graphite surface, and silicon nanomaterials (a composite of graphite with nano-silicon) with an increased specific surface area can be manufactured on the graphite surface by rapidly increasing the entropy due to rapid energy transfer.

Since the silicon-carbon composite manufacturing method using microwaves is a method of directly transferring energy to a carbon surface, and is efficient with time and energy compared to conventional heating methods, there is an advantage in that a manufacturing time and costs can be reduced. However, since the energy is transferred to only a portion irradiated with the microwaves, there is a problem of difficulty in forming silicon nanoparticles uniformly on an entire surface of carbon (graphite). In this case, it is difficult to sufficiently suppress volume expansion of the silicon nanoparticles through graphite particles during adsorption and desorption of lithium ions.
(Patent Document 0001) Application Patent No. 10-2491342
(Patent Document 0002) Laid-Open Patent No. 10-2022-0060341

### SUMMARY OF THE INVENTION

The present disclosure is directed to solving the above-described problems, and providing a microwave sintering apparatus capable of uniformly forming silicon nanoparticles on a surface of a carbon-based material by causing a uniform temperature increase on the entire surface of the carbon-based material (a heating element) through microwaves.

Further, the present invention is directed to uniformly depositing silicon nanoparticles on a surface of a carbon heating element, and this may be achieved by smooth stirring of the carbon heating element and a silicon raw material.

One embodiment of the present disclosure provides a rotary microwave apparatus including: a sintering body; a microwave-permeable cylindrical rotating tube located in the sintering body and configured to mix a powder raw material while rotating in a horizontal direction; and a microwave generator connected to the sintering body and configured to radiate microwaves to the cylindrical rotating tube, wherein the cylindrical rotating tube includes a stirring unit provided on an inner circumferential surface in a longitudinal direction, and configured to mix the powder raw material while being rotated by the cylindrical rotating tube.

The stirring unit may have a structure protruding toward a center of rotation of the cylindrical rotating tube and include a plurality of blades provided along a circumference of the inner circumferential surface of the cylindrical rotating tube, and the blade may be formed of a microwave-permeable material.

In the stirring unit, a ratio (H/ID) of a height (H) of the blade to an inner diameter (ID) of the cylindrical rotating tube may be 0.25 to 0.45.

In the stirring unit, a ratio (H/D50) of a height (H) of the blade to an average particle diameter (D50) of carbon-based materials included in the powder raw materials may be 1,000 to 10,000.

The cylindrical rotating tube may be provided so that a rotary shaft of the cylindrical rotating tube forms an inclination of 2° to 10° with respect to a lower surface of the sintering body.

In the cylindrical rotating tube, a ratio (ID/L) of an inner diameter (ID) to a length (L) may be 0.7 to 1.3.

The cylindrical rotating tube may be formed of a microwave-permeable material.

The sintering body may include a microwave reflective member on at least one surface of inner circumferential surfaces.

The sintering body may further include: a raw material inlet unit configured to allow one end of the cylindrical rotating tube to be rotatably inserted, and provided with a raw material inlet configured to inject the powder raw material into the cylindrical rotating tube; and a raw material outlet unit configured to allow the other end of the cylindrical rotating tube to be rotatably inserted, and provided with a raw material outlet configured to discharge the powder raw material discharged from the cylindrical rotating tube.

The sintering body may further include a rotating apparatus including a driving gear coupled to surround the cylindrical rotating tube and a driving motor engaged with the driving gear and configured to rotate the cylindrical rotating tube in a horizontal direction through the driving gear.

The sintering body may further include: a gas inlet unit provided with a gas inlet provided in communication with the cylindrical rotating tube and configured to allow a gas to move; and a gas outlet unit provided with a gas outlet.

A plurality of microwave generators may be provided on one surface of the sintering body in the longitudinal direction of the cylindrical rotating tube.

The microwave generator may further include a waveguide configured to guide microwaves radiated from the microwave generator to the cylindrical rotating tube..

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a perspective view of a rotary microwave apparatus according to one embodiment of the present disclosure;

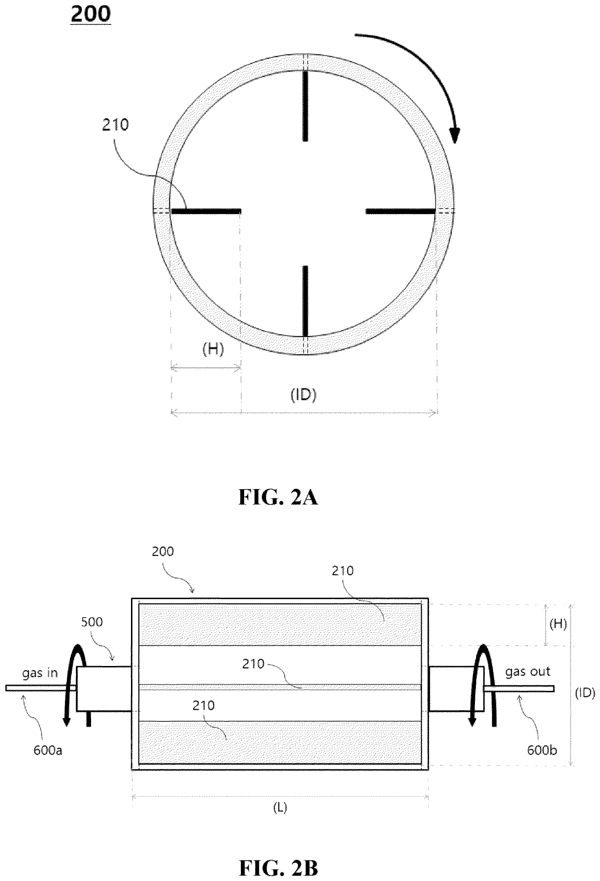

FIGS. 2A and 2B are a horizontal cross-sectional view (FIG. 2A) and a longitudinal cross-sectional view (FIG. 2B) of a cylindrical rotating tube of the present disclosure;

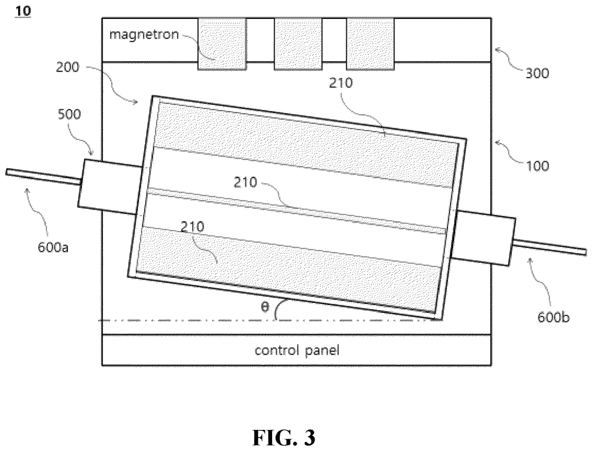

FIG. 3 is a cross-sectional view of the rotary microwave apparatus in FIG. 1 from the front; and
FIG. 4 is a scanning electron microscope (SEM) image of silicon carbon (Si/C) particles manufactured in Example 2.

### DETAILED DESCRIPTION OF EXEMPLARY EMBODIMENTS

Advantages and features of the present disclosure, and methods of achieving them will become apparent with reference to preferable embodiments, which are described in detail, in conjunction with the accompanying drawings. However, the present disclosure is not limited to the embodiments to be described below and may be implemented in different forms, the embodiments are only provided to completely disclose the present disclosure and completely convey the scope of the present disclosure to those skilled in the art, and the present disclosure is defined by the disclosed claims.

Unless otherwise defined, all terms (including technical and scientific terms) used in the present specification may be used with meanings which may be understood in common by those skilled in the art.

In the present specification, a case where a part "includes" a certain component means a case in which other components may be further included, rather than excluding other components, unless otherwise disclosed. Further, a singular form also includes a plural form unless otherwise mentioned in the context.

In the present specification, a case where a component such as an apparatus, a layer, a film, a region, a part, a member, a plate, or the like is located "on" or "above" another component includes not only a case of "directly on" the other component but also a case where there is still another component therebetween.

One embodiment of the present disclosure provides a rotary microwave apparatus.

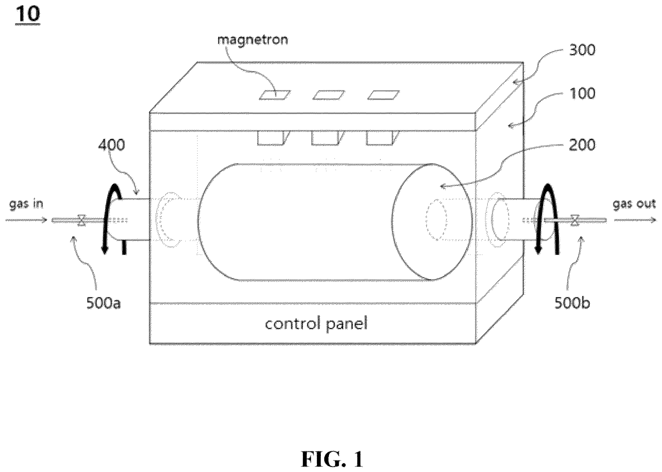

FIG. 1 is a perspective view illustrating the rotary microwave apparatus according to one embodiment of the present disclosure. Referring to FIG. 1, a rotary microwave apparatus 10 is an apparatus for synthesizing silicon carbon composite particles (Si/C composite particles) which are a negative electrode material for a secondary battery by uniformly coating silicon in a nanoparticle form on a carbon-based material surface, and includes: a sintering body 100; a microwave-permeable cylindrical rotating tube 200 which is located in the sintering body 100 and mixes a powder raw material while rotating in a horizontal direction; and a microwave generator 300 which is connected to the sintering body 100 and radiates microwaves to the cylindrical rotating tube 200, wherein the cylindrical rotating tube 200 includes a stirring unit 210 which is provided on an inner circumferential surface in a longitudinal direction and mixes the powder raw materials while being rotated by the cylindrical rotating tube 200. A conventional method and apparatus for forming silicon nanoparticles on a carbon surface using microwaves have an advantage of relatively reducing a manufacturing time and costs, but there is a problem in that silicon nanoparticles are non-uniformly formed on a carbon surface. According to the apparatus of the present disclosure, silicon nanoparticles may be uniformly formed on a carbon surface by causing an entirely uniform temperature increase on carbon (heating element) which generates heat by itself by microwaves among powder raw materials.

As the sintering body 100 provides an inner space and a case where individual apparatuses constituting the microwave sintering apparatus 10 of the present disclosure may be located, the cylindrical rotating tube 200, the microwave generators 300, and the like are disposed around the sintering body 100, and the individual apparatuses are connected. Further, the sintering body 100 serves to prevent leakage of microwaves radiated by the microwave generators 300 and concentrate the microwaves on the cylindrical rotating tube 200. In addition, in the sintering body 100, a powder raw material inlet unit/outlet unit (not shown), a rotating apparatus 400, a gas inlet unit/outlet unit 500a and 500b, and the like may be further disposed, and each of a temperature sensor, a pressure sensor, a flow sensor, a control valve, and the like connected to the sintering body 100 may be connected to a controller (a control panel). The configurations of other apparatuses such as a raw material input/output opening and closing apparatus, a gas input/output opening and closing apparatus, a rotating apparatus (motor), a driving apparatus, a microwave generation apparatus, and the like which operate according to a control signal may also be disposed in the sintering body 100 and connected to the controller.

The sintering body 100 may be formed with an inner space in which the cylindrical rotating tube 200 is disposed and may rotate in a horizontal direction. For example, the sintering body 100 may have a structure in which all surfaces (a left side surface, a right side surface, an upper surface (a plane), a lower surface (a bottom surface), a front surface (a front), and a rear surface (a back surface)) are closed. Meanwhile, in the present disclosure, formation of a gate (an opening and closing apparatus) on one surface of the sintering body 100 is not excluded.

The sintering body 100 may include a microwave reflective member on at least one surface of inner circumferential surfaces. Since the microwaves are randomly radiated, and thus some of the microwaves are not directed to the cylindrical rotating tube 200 and are absorbed by one surface of the sintering body 100, the self-heating efficiency of the powder raw material may be reduced. Meanwhile, the reflective member may be formed on at least one surface of the inner circumferential surfaces of the sintering body 100, for example, on at least one surface selected from the left side surface, the right side surface, the upper surface (the plane), the lower surface (the bottom surface), the front surface (the front), and the rear surface (the back surface), and preferably, on the left side surface, the right side surface, the lower surface, the front surface, and the rear surface, and specifically, on all or portions of one surface of the inner circumferential surfaces. Accordingly, microwaves radiated in multiple directions may be concentrated inside the cylindrical rotating tube.

The cylindrical rotating tube 200 is intended to simultaneously heat the injected powder raw materials through the microwaves while mixing the powder raw materials, and is located in the sintering body 100. The cylindrical rotating tube 200 is formed of a microwave-permeable material, and mixes the powder raw materials while rotating in the horizontal direction.

The cylindrical rotating tube 200 is provided in a cylindrical form and may be elongated in left and right directions when viewed from the front of the rotary microwave apparatus 10. It may be provided to be rotatable in the horizontal direction with respect to the upper surface of cylindrical rotating tube 200.

The cylindrical rotating tube 200 has an inner diameter (ID) of 50 mm to 500 mm, for example, 50 mm to 400 mm, or 100 mm to 250 mm, to be suitable for a nanomaterial complexing reaction. Further, in the cylindrical rotating tube, a ratio (ID/L) of the inner diameter (ID) to a length (L) may be 0.7 to 1.3, for example, 0.8 to 1.2 or 0.9 to 1.1. When the ID/L is outside the design range, it may be difficult to smoothly stir the powder raw materials.

Meanwhile, the length (L) of the cylindrical rotating tube 200 is a length of a rotating tube through which microwave radiation is conducted throughout the entire rotating tube, and the inner diameter (ID) of the cylindrical rotating tube is an inner diameter of a cylindrical rotating tube in which microwaves may be entirely absorbed by the raw material powders charged into a nanomaterial complexing reaction space. Further, the cylindrical rotating tube may be provided with baffles and/or other mixing elements in the rotating tube.

The cylindrical rotating tube 200 may be formed of a microwave-permeable material, for example, may be formed of a microwave-permeable material including quartz, and the cylindrical rotating tube may be formed of quartz.

Generally, a heating tube which performs heating using microwaves is manufactured with, preferably, high melting point materials which are microwave-permeable, and preferred thermally stable materials which are microwave-permeable include mainly a mineral-based material, for example, quartz, aluminum oxide, sapphire, zirconium oxide, silicon nitride, and the like. Other suitable tube materials are thermally stable plastics, for example, specifically fluoropolymers, for example, Teflon, and industrial plastics, for example, polypropylene or polyaryl ether ketone, for example, glass fiber-reinforced polyether ether ketone (PEEK). In order to withstand temperature conditions during the reaction, a mineral such as quartz or aluminum oxide covered with the plastics is reported to be particularly suitable as a reactor material.

Accordingly, heating elements (carbon-based materials) of the powder raw materials uniformly absorb the microwaves and are self-heated by the microwaves transmitted into the cylindrical rotating tube while mixing the powder raw materials to be injected. i) In the case of a single powder raw material (a single carbon particle), since the single carbon particle rotates 360° along with the rotating cylindrical rotating tube, heating element particles may uniformly absorb microwaves in entire particle surfaces to improve local (surface) heating in the single carbon particle, and ii) in the case of total powder raw materials (total carbon particles), since interparticle stirring and heat conduction are conducted simultaneously with individual self-heating of the single particles, the local (particle) heating between a plurality of carbon particles may be improved.

The cylindrical rotating tube 200 includes the stirring unit 210 which is provided on the inner circumferential surface in a longitudinal direction and mixes the powder raw material while being rotated by the cylindrical rotating tube 200
The stirring unit 210 may have a structure protruding toward a center of rotation of the cylindrical rotating tube 200, and for example, may have a structure protruding toward the center of the rotation of the cylindrical rotating tube 200 from all or a portion of a longitudinal length of the cylindrical rotating tube 200 (the height of the cylindrical rotating tube 200). Accordingly, when the cylindrical rotating tube 200 and the stirring unit 210 rotate, the raw powder injected to the inside may be effectively stirred by repeatedly rising and falling (free-falling) together according to an inclination of the stirring unit 210.

Further, the stirring unit 210 may include a plurality of blades provided along a circumference of the inner circumferential surface of the cylindrical rotating tube 200. The blade may be formed of a microwave-permeable material. Specifically, the blade may be formed of a microwave-permeable material including quartz. The blade may be formed of quartz. When the blade is formed of a material which absorbs microwaves and is heated, there is a problem in that the powder raw materials are locally heated due to heat conduction by contact with the powder raw materials, a problem in that a cylindrical rotating tube apparatus including the blades is overheated, and a problem that a material with a low melting point among the powder raw materials melts on blade surfaces, and thus complexing the desired mixed powder raw material is hindered. Further, when the blade is formed of a material which reflects microwaves, since it is difficult to intensively radiate microwaves to the powder raw materials, the efficiency of microwave absorption by the powder raw materials may be reduced.

In the stirring unit 210, a ratio (H/ID) of a height (H) of the blade to an inner diameter (ID) of the cylindrical rotating tube 200 may be 0.25 to 0.45, for example, 0.25 to 0.4, 0.25 to 0.35, or 0.3 to 0.35. When the H/ID is outside the design range, it may be difficult to smoothly stir the powder raw materials.

Further, in the stirring unit 210 of the present disclosure, the blade has a height (H) of the blade of 2.5 mm to 225 mm, for example, 10 mm to 180 mm, 20 mm to 160 mm, or 45 mm to 80 mm, to be suitable for a nanomaterial complexing reaction.

When the height (H) of the blade and the inner diameter (ID) of the cylindrical rotating tube 200 satisfy the above-described range, the mixed powder raw materials of a carbon heating element and silicon may secure free fall time and distance due to a protruding length (a height, H) of the blade. Here, the powder raw materials are spaced apart from each other when freely falling, and thus uniformly absorb microwaves without being blocked by adjacent powder raw materials. Since uniform radiation with the microwaves per unit content (unit volume) of powder raw material is possible, a uniform nano-complexing reaction is conducted. On the other hand, when the ratio (H/ID) of the height (H) of the blade to the inner diameter (ID) of the cylindrical rotating tube 200 is less than 0.25, rotation of each powder raw material (carbon particle) is easy, but upside down of total powder raw materials is difficult to conduct. Accordingly, since only surface powder raw materials located close to the microwave generators among the total powder raw material mixtures absorb microwaves, a heating deviation with the internal powder raw materials easily occurs. Further, when the ratio (H/ID) of the height (H) of the blade to the inner diameter (ID) of the cylindrical rotating tube 200 exceeds 0.45, since a rate at which the powder raw material mixtures stay on the blade increases, it is difficult to sufficiently secure the free fall time and distance. Accordingly, since only the surface powder raw materials located close to the microwave generators absorb the microwaves, the heating deviation with the internal powder raw materials easily occurs.

Further, the ratio (H/D50) of the height (H) of the blade to the average particle diameter (D50) of the carbon-based materials included in the powder raw materials may be 1,000 to 10,000, for example, 2,000 to 9,000, 3,000 to 8,000, or 4,000 to 8,000. Accordingly, the above-described effects may be further increased.

Meanwhile, the cylindrical rotating tube 200 may be provided so that a rotary shaft of the cylindrical rotating tube 200 forms an inclination (θ) of 2° to 10° with respect to a lower surface of the sintering body 100, for example, an inclination (θ) of 3° to 7° or 3° to 5°, and here, as one end of the cylindrical rotating tube 200 to which the raw material inlet unit is connected is directed upward, and conversely, the other end of the cylindrical rotating tube 200 to which the raw material outlet unit is connected is directed downward to form the inclination, the cylindrical rotating tube 200 may facilitate injecting the powder raw materials and transferring and discharging the powder raw materials after a reaction is completed. Further, the injection and discharging after the reaction of the powder raw materials may be achieved within a short reaction time of about 1 minute by adjusting the inclination within the above-described range. On the other hand, when the inclination is outside this inclination value range, a degree of the reaction may be excessive or insufficient and thus the desired properties may not be exhibited.

The microwave generators 300 are connected to the sintering body 100 and radiate microwaves to the cylindrical rotating tube 200, and are intended to complex (coat) silicon nanoparticles on a carbon surface by self-heating a surface temperature of carbon among the powder raw materials in the cylindrical rotating tube 200 to about 1,400 °C.

The microwave generators 300 may be a plurality of magnetrons, klystrons, and gyrotrons which generate high-output microwaves of 1 kW to 3 kW or 3 kW, and preferably, may be magnetrons. Here, a plurality of microwave generators 300 may be provided on one surface of the sintering body 100 in a longitudinal direction of the cylindrical rotating tube 200. Meanwhile, a microwave is an electromagnetic wave with a wavelength of about 1 cm to 1 m and a frequency of about 300 MHz to 30 GHz, and it is preferable to use a microwave having a frequency approved for industrial, scientific, medical, household or similar applications, for example, a frequency of 915 MHz, 2.45 GHz, 5.8 GHz or 24.12 GHz.

Specifically, at least one or more, for example, one to five, microwave generators 300 may be installed on an upper surface, one side surface, or a rear surface of the sintering body 100. Accordingly, since the microwave generators 300 are connected to the sintering body 100 and fixed to a specific position, the microwaves may be stably radiated to the cylindrical rotating tube 200 without affecting the rotation of the cylindrical rotating tube 200 and the raw material powders.

Meanwhile, a controller 700 may supply power to each microwave generator 300 to radiate the microwaves to the cylindrical rotating tube 200. The microwave generator 300 may further include a waveguide which guides the microwaves radiated from the microwave generator 300 to the cylindrical rotating tube 200. Since the waveguide is a common configuration used in a microwave generation apparatus in the corresponding technical field, detailed description thereof will be omitted.

The raw material inlet unit (not shown) may allow one end of the cylindrical rotating tube 200 to be rotatably inserted, and be provided with the raw material inlet which injects the powder raw materials into the cylindrical rotating tube 200, and the raw material outlet unit (not shown) may allow the other end of the cylindrical rotating tube 200 to be rotatably inserted, and be provided with the raw material outlet which discharges the powder raw materials discharged from the cylindrical rotating tube 200. It is obvious that each of the inlet and outlet 410a and 410b of the raw material inlet unit/outlet unit (not shown), through which the raw materials are injected and discharged, may be located inside or outside the cylindrical rotating tube 200, and the raw material inlet unit/outlet unit (not shown) may be further provided with connection tubes, supply screws, and the like connected up to the cylindrical rotating tube 200.

Meanwhile, the raw material inlet unit/outlet unit and one end (the other end) of the cylindrical rotating tube 200 may maintain a state of being spaced apart from each other at set intervals, and accordingly, the microwaves radiated into the cylindrical rotating tube 200 may be prevented from being directly radiated to the raw material inlet unit/outlet unit, and accordingly, the raw material inlet unit/outlet unit may be prevented from being damaged or deformed. Specifically, a heat-resistant member (not shown) having heat resistance and a choke structure (not shown) for preventing microwave leakage may be further provided between the raw material inlet unit/outlet unit and one end of the rotating tube 200, and accordingly, the raw material inlet unit/outlet unit may be prevented from being deformed by the microwaves.

The gas inlet unit and the gas outlet unit 500a and 500b may be provided in communication with the cylindrical rotating tube 200 and may be respectively provided with the gas inlet and the gas outlet (not shown) which allow a gas to move. Here, a gas may be injected into the cylindrical rotating tube 200 through the gas inlet unit and then react or not react with the powder raw materials, and a gas discharged from the cylindrical rotating tube 200 may be recovered through the gas outlet unit.

Air, oxygen, and an inert gas may be injected into the cylindrical rotating tube 200 connected to the gas inlet unit/outlet unit (not shown). Accordingly, an internal pressure may be increased. Further, the cylindrical rotating tube 200 may be at a negative pressure because the air or gases therein are removed. In addition, the cylindrical rotating tube 200 may receive a refrigerant gas to cool the internal powder raw materials after a reaction is completed.

Meanwhile, the gas inlet unit/outlet unit (not shown) may have structures respectively included in the raw material inlet unit/outlet unit, or may have structures connected to the inside of one end (the other end) of the cylindrical rotating tube 200 through the raw material inlet unit/outlet unit. Accordingly, the gas inlet unit/outlet unit (not shown) may freely rotate along with the cylindrical rotating tube 200 or may inject or discharge air, oxygen, and an inert gas without affecting the rotation of the cylindrical rotating tube 200.

The rotating apparatus 400 may include a driving gear coupled t to surround the cylindrical rotating tube 200 and a driving motor engaged with the driving gear and configured to rotate the cylindrical rotating tube 200 in the horizontal direction through the driving gear. For example, the rotating apparatus 400 may further include a driving gear provided to surround an outer circumferential surface of the cylindrical rotating tube 200, and a support which supports the driving gear while engaged with both sides of a bottom surface of the driving gear, and is provided with a support gear rotated by the driving gear, and in the rotating apparatus 400 having these configurations, when the cylindrical rotating tube 200 rotates, the driving gear rotates in conjunction with the rotating tube 200 and the support gear is rotated by the driving gear. In this case, since the support gear supports both sides of a bottom portion of the driving gear, the cylindrical rotating tube 200 may be stably rotated in the horizontal direction.

The rotating apparatus 400 is provided between one end of the cylindrical rotating tube 200 and the sintering body 100, and between the other end of the cylindrical rotating tube 200 and the sintering body 100, and thus may stably support one end and the other end of the cylindrical rotating tube 200.

Hereinafter, a method of operating the rotary microwave apparatus 10 according to one embodiment of the present disclosure will be described.

First, the cylindrical rotating tube 200 is rotated in a horizontal direction through the rotating apparatus 400. A rotating speed of the cylindrical rotating tube 200 may be 1 rpm to 100 rpm, for example, 5 rpm to 100 rpm, 5 rpm to 80 rpm, 5 rpm to 60 rpm, 5 rpm to 50 rpm, 5 rpm to 40 rpm, 5 rpm to 30 rpm, 5 rpm to 20 rpm, or 10 rpm to 30 rpm. When the rotating speed is outside the design range, it may be difficult to smoothly stir powder raw materials.

In this state, when the powder raw materials are injected into one end of the cylindrical rotating tube 200 through the raw material inlet of the raw material inlet unit (not shown), the powder raw materials are mixed while moving in a direction from one end to the other end of the cylindrical rotating tube 200.

Subsequently, microwaves are radiated to the cylindrical rotating tube 200 through the microwave generators 300. The microwaves generated by the microwave generators 300 are guided to a cylindrical rotating tube surface through a waveguide, and the powder raw materials rotated and moved by the stirring unit 210 of the cylindrical rotating tube 200 absorb the microwaves guided to the cylindrical rotating tube 200 and then raise the temperature of the carbon surface by themselves while generating heat.

Here, a gas is injected into the cylindrical rotating tube 200 through the gas inlet unit 500a and then reacts or does not react with the powder raw materials, and a gas discharged from the cylindrical rotating tube 200 is recovered through the gas outlet unit 500b.

Thereafter, when the powder raw materials of which heating and nano-complexing have been completed are discharged through the other end of the cylindrical rotating tube 200, the powder raw materials are stored through the raw material outlet of the raw material outlet unit (not shown).

Hereinafter, the present disclosure will be described in detail through examples, but these are provided to describe the present disclosure in more detail, and the scope of the present disclosure is not limited by the examples to be described below.

### Examples 1 to 3

Natural graphite (D50: 15 µm) and plate-shaped silicon particle (D50: 400 nm) powders were injected into a particle mixer at a weight ratio of 9:1 and mechanically stirred.

100 g of the mixed natural graphite and silicon particle mixture powders were charged into a cylindrical rotating tube (an inner diameter: 180 mm, a length: 180 mm, and number/height of blades: 3/60 mm) which rotated at a speed shown in Table 1 to be described below.

Subsequently, microwaves (two magnetrons of 2,450 MHz and 3 kW) were radiated in a direction of the cylindrical rotating tube for 1 minute to generate heat from carbon heating elements. In this case, a temperature of the heating elements was about 1,400 °C, treatment was conducted for 1 minute, and then cooling of -5 °C/min was conducted to finally manufacture a Si/C composite particle negative electrode active material formed with a silicon nanoparticle coating layer on a natural graphite surface.

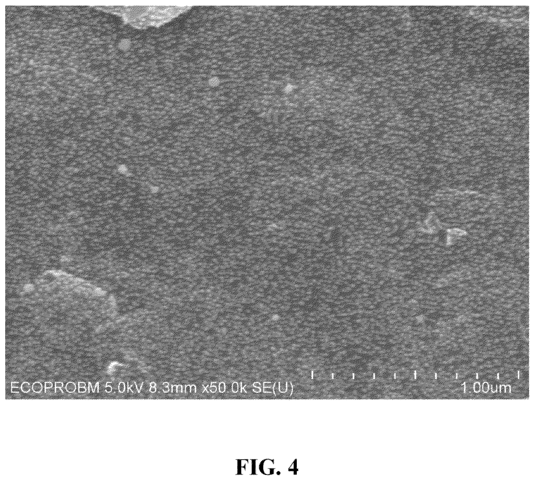

FIG. 4 illustrates a scanning electron microscope (SEM) image of Si/C particles manufactured according to Example 2, and in Table 1 to be described below, silicon nanoparticle deposition efficiency (Equation 1) according to a rotating speed of the cylindrical rotating tube is summarized. Deposition efficiency = 1-(weight of unreacted silicon particles/weight of total silicon particles) (%)

**[Table 1]**

| | Rotating speed (RPM) | Silicon nanoparticle deposition efficiency (%) |
|---|---|---|
| Example 1 | 0 to 5 | 40 |
| Example 2 | 5 to 50 | 90 |
| Example 3 | 50 or more | 30 |

Referring to FIG. 4, it can be seen that silicon nanoparticles were uniformly coated on the natural graphite surface in the Si/C particles manufactured in Example 2.

According to the present disclosure, since microwaves are radiated while a cylindrical rotating tube rotates 360°, the uniform temperature distribution due to a uniform temperature increase is achieved on an entire carbon heating element, and thus it is possible to uniformly deposit silicon nanoparticles on a carbon heating element surface.

Further, the electrochemical properties of a final silicon-graphite composite negative electrode material can be maximized by minimizing formation of silicon carbide (SiC) due to a local temperature increase.

Although embodiments of the present disclosure have been described above, the present disclosure is not limited to the embodiments and may be manufactured in various different forms, and those skilled in the art may understand that the present disclosure may be implemented in other specific forms. Accordingly, the above-described embodiments should be understood as being exemplary and not limiting.

## Claims

1. A rotary microwave apparatus comprising:
a sintering body (100);
a microwave-permeable cylindrical rotating tube (200) located in the sintering body (100) and configured to mix a powder raw material while rotating in a horizontal direction; and
a microwave generator (300) connected to the sintering body (100) and configured to radiate microwaves to the cylindrical rotating tube (200),
wherein the cylindrical rotating tube (200) includes a stirring unit (210) provided on an inner circumferential surface in a longitudinal direction, and configured to mix the powder raw material while being rotated by the cylindrical rotating tube (200).

2. The rotary microwave apparatus of claim 1, wherein:
the stirring unit (210) has a structure protruding toward a center of rotation of the cylindrical rotating tube (200) and includes a plurality of blades provided along a circumference of the inner circumferential surface of the cylindrical rotating tube (200); and
the blade is formed of a microwave-permeable material.

3. The rotary microwave apparatus of claim 2, wherein, in the stirring unit (210), a ratio (H/ID) of a height (H) of the blade to an inner diameter (ID) of the cylindrical rotating tube (200) is 0.25 to 0.45.

4. The rotary microwave apparatus of claim 2 or 3, wherein, in the stirring unit (210), a ratio (H/D50) of a height (H) of the blade to an average particle diameter (D50) of a carbon-based material included in the powder raw material is 1,000 to 10,000.

5. The rotary microwave apparatus of one of claims 1 to 4, wherein the cylindrical rotating tube (200) is provided so that a rotary shaft of the cylindrical rotating tube forms an inclination of 2° to 10° with respect to a lower surface of the sintering body (100).

6. The rotary microwave apparatus of one of claims 1 to 5, wherein, in the cylindrical rotating tube (200), a ratio (ID/L) of an inner diameter (ID) to a length (L) is 0.7 to 1.3.

7. The rotary microwave apparatus of one of claims 1 to 6, wherein the cylindrical rotating tube (200) is formed of a microwave-permeable material.

8. The rotary microwave apparatus of one of claims 1 to 7, wherein the sintering body (100) includes a microwave reflective member on at least one surface of inner circumferential surfaces.

9. The rotary microwave apparatus of one of claims 1 to 8, wherein the sintering body (100) further includes:
a raw material inlet unit configured to allow one end of the cylindrical rotating tube (200) to be rotatably inserted, and provided with a raw material inlet configured to inject the powder raw material into the cylindrical rotating tube (200); and
a raw material outlet unit configured to allow the other end of the cylindrical rotating tube to be rotatably inserted, and provided with a raw material outlet configured to discharge the powder raw material discharged from the cylindrical rotating tube.

10. The rotary microwave apparatus of one of claims 1 to 9, wherein the sintering body further includes a rotating apparatus (400) including a driving gear coupled to surround the cylindrical rotating tube (200) and a driving motor engaged with the driving gear and configured to rotate the cylindrical rotating tube (200) in a horizontal direction through the driving gear.

11. The rotary microwave apparatus of one of claims 1 to 10, wherein the sintering body further includes:
a gas inlet unit (500a) provided with a gas inlet provided in communication with the cylindrical rotating tube (200) and configured to allow a gas to move; and
a gas outlet unit (500b) provided with a gas outlet.

12. The rotary microwave apparatus of one of claims 1 to 11, wherein a plurality of microwave generators (300) are provided on one surface of the sintering body (100) in the longitudinal direction of the cylindrical rotating tube (200).

13. The rotary microwave apparatus of one of claims 1 to 12, wherein the microwave generator (300) further includes a waveguide configured to guide microwaves radiated from the microwave generator (300) to the cylindrical rotating tube (200).
